# FASCICULE DE BREVET EUROPEEN

(11) **EP 2 830 173 B1**
(45) Date de publication et mention de la délivrance du brevet: **05.04.2017**
(21) Numéro de dépôt: 14177821.7
(22) Date de dépôt: 21.07.2014
(51) Int. Cl.: H02G 3/00, H02G 3/04

(54) **Ensemble de cheminement de câbles**
Kabelkanalanordnung
Cable routing assembly

(30) Priorité: 22.07.2013 FR 1357209
(43) Date de publication de la demande: 28.01.2015
(73) Titulaire: Legrand France, 87000 Limoges (FR); Legrand SNC, 87000 Limoges (FR)
(72) Inventeur: Bethoule, Julien, 72000 LE MANS (FR); Denis, Laurent, 72190 Sargé Lès Le Mans (FR)
(74) Mandataire: Santarelli

(56) Documents cités:
- EP-A1- 0 556 137
- EP-A1- 1 206 022
- EP-A1- 1 315 261
- EP-A1- 2 381 549
- EP-A1- 2 453 540
- DE-A1- 19 531 658
- FR-A1- 2 652 142

## Description

### DOMAINE DE L'INVENTION

L'invention a trait au cheminement des câbles dans des chemins de câbles ajourés présentant un fond et des ailes latérales.

### ARRIÈRE-PLAN TECHNOLOGIQUE

On sait que de tels chemins de câbles sont couramment utilisés pour faire courir des câbles électriques ou analogues, par exemple des conduits pneumatiques, le long des parois de certains locaux, en particulier le long d'un mur ou d'un plafond.

En général, les chemins de câbles ajourés sont formés par un treillis de fils métallique ou par une tôle perforée pliée.

En pratique, un chemin de câbles est formé par des tronçons de chemin de câbles disposés bout à bout et assujettis l'un à l'autre par des dispositifs tels que des éclisses. Il est entendu qu'ici l'expression « *chemin de câbles* » vise les tronçons de chemins de câbles et les dispositifs d'assujettissement entre les tronçons de chemin de câbles successifs.

### OBJET DE L'INVENTION

L'invention vise à améliorer les qualités d'aspect de tels chemins de câbles dans des conditions simples, commodes et économiques.

L'invention propose à cet effet un ensemble de cheminement de câbles, comportant un chemin de câbles ajouré présentant un fond et des ailes latérales, ledit ensemble étant prévu pour être installé le long d'un plafond ; caractérisé en ce qu'il comporte en outre au moins un bandeau coudé dont la face concave est tournée vers le chemin de câbles ainsi que des attaches servant à la fixation entre le chemin de câble et le bandeau coudé, lequel bandeau coudé est fixé sur ledit chemin de câbles exclusivement par lesdites attaches et enveloppe extérieurement ledit chemin de câbles au droit d'une seule aile latérale et au droit d'au moins une partie du fond à partir de cette aile latérale.

Le bandeau coudé que comporte l'ensemble de cheminement selon l'invention habille partiellement le chemin de câbles, extérieurement.

L'aspect de l'ensemble de cheminement selon l'invention, en particulier s'il est installé le long d'un plafond et qu'il est regardé par un observateur au sol, est donc procuré partiellement par le bandeau coudé, qui est une pièce simple à laquelle il est facile de donner de bonnes qualités d'aspect.

L'ensemble de cheminement de câbles selon l'invention peut donc rester visible, y compris dans un local tertiaire, plutôt que d'être caché par un faux plafond.

Le fait que le chemin de câbles ne soit que partiellement masqué par le bandeau coudé laisse disponible la partie du chemin de câbles non masquée, par exemple pour servir de support de fixation à des appareils électriques tels que des luminaires ou des détecteurs de fumées.

L'ensemble de cheminement de câbles selon l'invention offre donc de bonnes qualités d'aspect tout en préservant l'un des intérêts d'un chemin de câbles nu.

L'ensemble de cheminement de câbles selon l'invention préserve également un autre des intérêts d'un chemin de câbles nu à savoir la bonne ventilation des câbles ou analogues disposés dans le chemin de câbles.

Le bandeau coudé que comporte l'ensemble de cheminement selon l'invention pour habiller le chemin de câbles, seul ou avec un autre bandeau, peut être fabriqué aisément puisqu'il s'agit d'une pièce qui a une largeur raisonnable dont la conformation fait intervenir un seul côté latéral du chemin de câbles (et non les deux côtés).

Ce caractère unilatéral du bandeau coudé de l'ensemble de cheminement selon l'invention offre une grande flexibilité d'agencement, par exemple, comme exposé ci-après, habiller un même chemin de câbles d'un côté et de l'autre avec deux bandeaux coudés, ou habiller deux chemins de câbles disposés côte-à-côte avec deux bandeaux coudés disposés d'un côté et de l'autre du dispositif de cheminement de câbles formé par ces deux chemins de câbles.

Selon des caractéristiques avantageuses de mise en oeuvre de l'ensemble de cheminement de câbles selon l'invention :
- ledit bandeau coudé comporte une paroi principale et des nervures orientées longitudinalement, saillant de ladite paroi principale du côté concave dudit bandeau coudé ; et chaque dite attache comportant des organes d'accrochage sur lesdites nervures ;
- ledit chemin de câbles est en treillis de fils métalliques et ladite attache comporte au moins un système d'encliquetage sur des fils dudit chemin de câbles ;
- ledit chemin de câbles est en tôle perforée et ladite attache comporte des crans de retenue sur le voisinage d'ouvertures du chemin de câbles ; et/ou
- ledit bandeau coudé est entièrement courbé entre son côté longitudinal supérieur et son côté longitudinal inférieur.

Dans un mode de réalisation avantageux, dans l'ensemble de cheminement de câbles selon l'invention, l'habillage est bilatéral, et plus précisément l'ensemble comporte un dispositif de cheminement formé par ledit chemin de câbles ou formé par ledit chemin de câbles et par au moins un autre chemin de câbles avec les chemins de câbles du dispositif qui sont agencés côte-à-côte, chaque chemin de câbles que comporte ledit dispositif étant ajouré et présentant un fond et des ailes latérales ; et ledit ensemble comporte un habillage formé au moins par ledit bandeau coudé et par un autre bandeau coudé, ledit habillage enveloppant extérieurement ledit dispositif de chaque côté latéral et partiellement du côté bas à partir de chaque côté latéral.

Selon des caractéristiques avantageuses de mise en oeuvre de ce mode de réalisation :
- ledit dispositif de cheminement est formé par ledit chemin de câbles et par au moins un autre chemin de câbles ; et ledit habillage est formé par ledit bandeau coudé, par ledit autre bandeau coudé et par au moins un bandeau droit enveloppant ledit dispositif du côté bas au moins au droit d'une zone à cheval entre deux dits chemins de câbles ;
- ledit habillage enveloppe extérieurement du côté bas ledit dispositif sauf au droit de la partie médiane du fond de chaque dit chemin de câbles ;
- ledit bandeau droit comporte une paroi principale et des nervures orientés longitudinalement, saillant de ladite paroi principale ; et ledit ensemble comporte des attaches pour la fixation entre lesdits chemins de câbles dudit dispositif de cheminement et ledit bandeau droit, chaque dite attache comportant des organes d'accrochage sur lesdites nervures ; et/ou
- ledit dispositif de cheminement est formé par ledit chemin de câbles et par au moins un autre chemin de câbles ; et ledit ensemble comporte un élément de montage pour au moins un appareil électrique entre ledit chemin de câbles et ledit autre chemin de câbles, lequel élément de montage est configuré pour se prendre sur ledit chemin de câbles et ledit autre chemin de câbles.

### BRÈVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en perspective d'un ensemble de cheminement de câbles selon l'invention et d'une console pour fournir un support horizontal au chemin de câbles que comporte cet ensemble de cheminement ;
- la figure 2 est une vue en élévation de face de cet ensemble de cheminement et de cette console ;
- les figures 3 et 4 sont les vues de détail repérées respectivement par III sur la figure 1 et par IV sur la figure 2 ;
- la figure 5 est une vue partielle en perspective, prise de dessous, montrant des appareils électriques fixés au chemin de câble entre les bandeaux coudés formant l'habillage de l'ensemble de cheminement, les appareils électriques étant ici un détecteur de fumées et un luminaire à tubes luminescents ;
- la figure 6 est une vue semblable à la figure 2, mais pour une variante de l'ensemble de cheminement dans laquelle les bandeaux coudés de l'habillage ont une portion en regard du fond du chemin de câbles qui est plus courte ;
- les figures 7 à 10 sont des vues semblables aux figures 1 à 4, mais pour un chemin de câbles en tôle perforée plutôt qu'en treillis de fils ;
- les figures 11 à 13 sont des vues semblables aux figures 1, 2 et 6, mais pour un ensemble de cheminement comportant deux chemins de câbles côte à côte ;
- les figures 14 à 16 sont des vues semblables aux figures 11 à 13, mais pour des chemins de câbles en tôle perforée plutôt qu'en treillis de fils ;
- la figure 17 est une vue semblable à la figure 15, mais avec un élément de montage d'un appareil électrique fixé à cheval sur les deux chemins de câbles et disposé entre les deux bandeaux coudés ;
- les figures 18 et 19 sont des vues semblables aux figures 11 et 12, mais pour deux chemins de câbles plus larges et un habillage qui comporte en outre un bandeau droit situé entre les deux bandeaux coudés ;
- les figures 20 et 21 sont les vues de détail repérées respectivement par XX sur la figure 18 et par XXI sur la figure 19 ; et
- les figures 22 à 24 sont des vues semblables aux figures 18, 19 et 21, mais pour des chemins de câbles en tôle perforée plutôt qu'en treillis de fils.

### DESCRIPTION DÉTAILLÉE D'EXEMPLES DE RÉALISATION

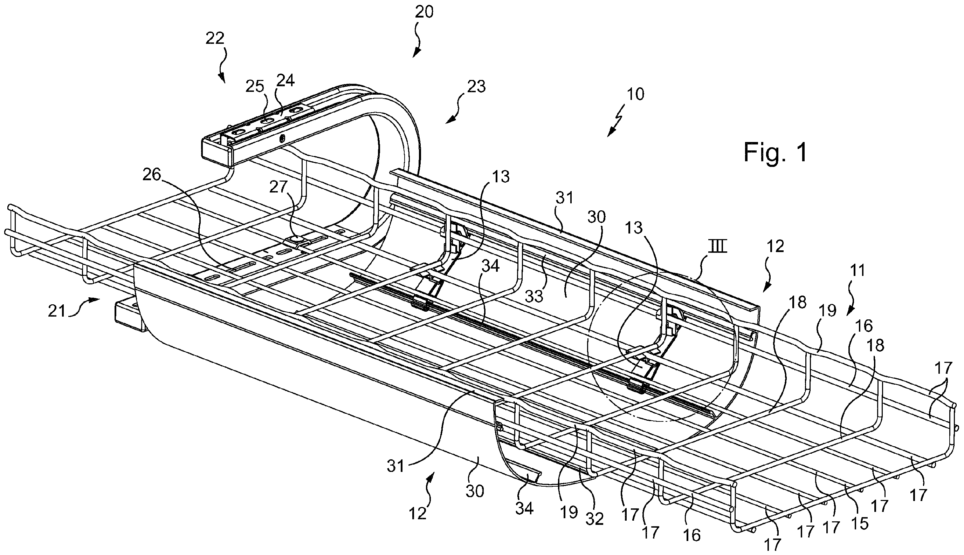

L'ensemble de cheminement de câbles 10 illustré sur les figures 1 à 4 comporte un chemin de câbles 11, deux bandeaux coudés 12 et des attaches 13 servant à la fixation entre le chemin de câbles 11 et les bandeaux coudés 12.

Le chemin de câbles 11 est un chemin de câbles conventionnel à profil en U dont les parois, en l'occurrence un fond 15 et deux ailes latérales 16, sont ajourées.

Ici le chemin de câbles 11 est du type formé par un treillis de fils métalliques, à savoir des fils de chaîne 17 s'étendant longitudinalement et des fils de trame 18 s'étendant transversalement, conformés en U, avec une soudure à chaque intersection entre un fil de chaîne 17 et un fil de trame 18.

Les fils de chaîne 17 qui s'étendent au niveau des extrémités des fils de trame 18 forment chacun un bord de rive 19 du chemin de câbles 11.

Ici, le chemin de câbles 11 est prévu pour courir le long d'un plafond ou d'une autre structure présentant une surface en surplomb de l'espace où doit se trouver le chemin de câbles 11.

Le long du plafond ou autre structure, le fond 15 est prévu pour être orienté horizontalement, y compris lorsque le plafond ou autre structure est incliné.

La fixation du chemin de câbles 11 à la structure telle qu'un plafond s'effectue ici par des consoles 20, dont une seule est représentée.

Chaque console 20 comporte une portion 21 configurée pour former un support horizontal pour le chemin de câbles 11, une portion 22 configurée pour être fixée sur la structure telle qu'un plafond et un coude 23 situé entre la portion 21 et la portion 22.

La fixation de la portion 22 sur la structure telle qu'un plafond s'effectue grâce à un accessoire de fixation 24 présentant des ouvertures 25 pour le passage de la tige d'une vis ou d'un autre organe de fixation.

Le fond 15 du chemin de câbles 11 repose sur la portion 21 de la console 20.

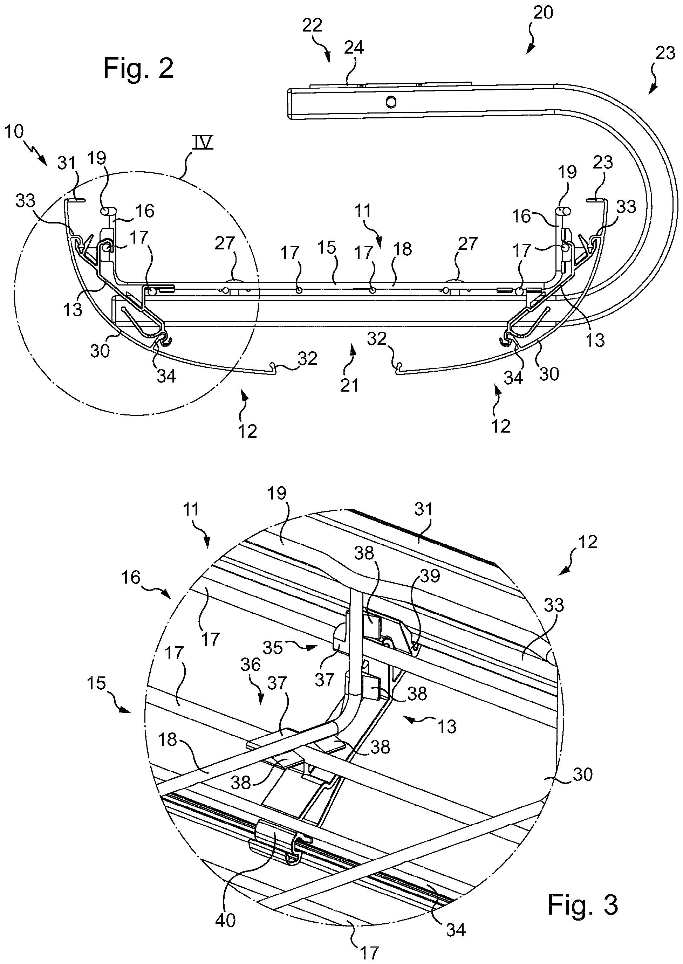

Pour permettre la fixation du chemin de câbles 11 à la console 20, la portion 21 présente des ouvertures 26 pour le passage de la tige d'une vis ou d'un autre organe de fixation tel que l'organe de fixation 27 montré sur les figures 1 et 2.

On notera que la console 20 fait l'objet d'une demande de brevet français des demanderesses.

Chaque bandeau coudé 12 s'étend entre deux consoles 20 ou organes de support analogues.

Les bandeaux coudés 12 sont identiques et disposés tête-bêche. Ainsi, l'un des bandeaux coudés 12 a une disposition qui est l'image miroir de l'autre bandeau coudé 12.

Chaque bandeau coudé 12 est un élément profilé, ici obtenu par extrusion d'une matière relativement rigide, par exemple une matière plastique.

Chaque bandeau coudé 12 présente une paroi principale 30 qui est à profil incurvé et qui est allongée suivant la direction longitudinale.

Ici, les côtés longitudinaux de la paroi principale 30 sont parallèles l'un à l'autre.

Du côté où la paroi principale 30 est concave, c'est-à-dire du côté prévu pour être tourné vers le chemin de câbles 11, le bandeau coudé 12 comporte :
- un retour 31 et un retour 32 chacun raccordé par un côté longitudinal à un côté longitudinal respectif de la paroi principale 30 ; et
- une nervure 33 et une nervure 34, s'étendant chacune longitudinalement, avec la nervure 33 qui est située entre le retour 31 et la nervure 34, et avec la nervure 34 qui est située entre la nervure 33 et le retour 32.

Chaque attache 13 est configurée pour se prendre, d'une part, sur des fils du chemin de câbles 11 et, d'autre part, sur les nervures 33 et 34 du bandeau coudé 12.

Le fait d'utiliser des attaches 13 intermédiaires entre le bandeau coudé 12 et le chemin de câbles 11, plutôt que de fixer directement le bandeau coudé 12 sur le chemin de câbles 11, offre l'avantage de permettre au bandeau coudé 12 d'avoir des formes simples, en particulier les nervures 33 et 34, pouvant être obtenues de façon commode et économique, ici par extrusion.

Les formes complexes permettant la fixation entre le bandeau coudé 12 et le chemin de câbles 11 figurent sur les attaches 13, qui sont en matière rigide mais avec une certaine élasticité, ici une matière plastique moulée.

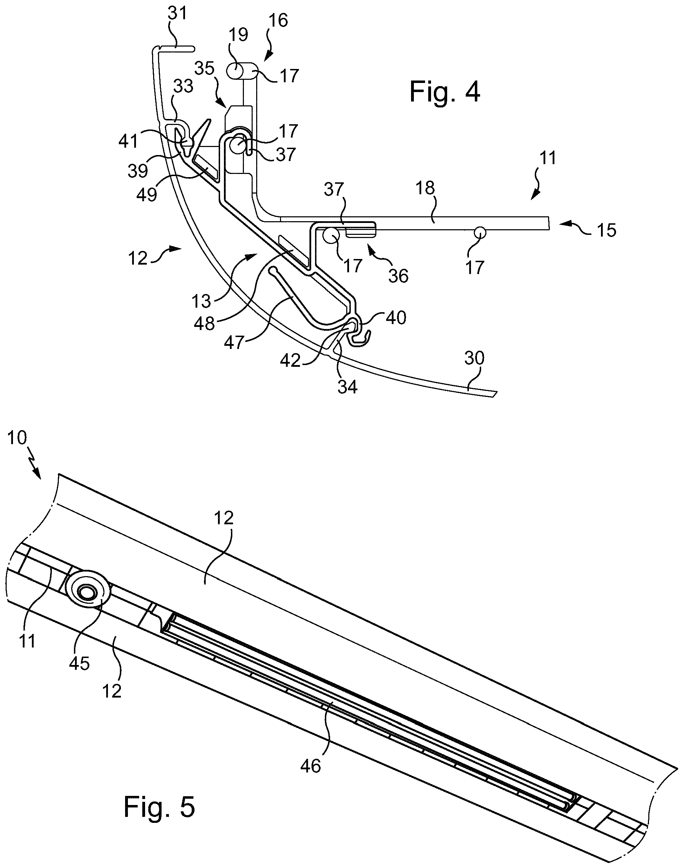

On va maintenant décrire plus en détail l'attache 13, à l'appui des figures 3 et 4.

L'attache 13 comporte un système d'encliquetage 35 pour se prendre sur une zone d'intersection d'un fil de chaîne 17 et d'un fil de trame 18 d'une paroi latérale 16 ; et un système d'encliquetage 36 pour se prendre sur une zone d'intersection entre un fil de chaîne 17 et un fil de trame 18 du fond 15.

Plus précisément, le système d'encliquetage 35 et le système d'encliquetage 36 sont prévus pour se prendre sur le même fil de trame 18 et sur deux fils de chaîne 17 voisins faisant partie respectivement d'une aile latérale 16 et du fond 15.

Sur l'aile latérale 16 (système d'encliquetage 35) il s'agit du fil de chaîne 17 le plus proche du fond 15, et sur le fond 15 (système d'encliquetage 36) il s'agit du fil de chaîne 17 le plus proche de cette aile latérale 16.

Chacun des systèmes d'encliquetage 35 et 36 comporte un organe d'appui 37 sur le fil de chaîne 17 et deux crans de retenue 38 sur le fil de trame 18.

Les crans de retenue 38 sont disposés de part et d'autre de l'organe d'appui 37, pour se prendre sur le fil de trame 18 de part et d'autre du fil de chaîne 17.

Ici, les crans de retenue 38 sont configurés pour être disposés du côté externe du fil de trame 18 tandis que les organes d'appui 37 sont configurés pour être disposés du côté interne des fils de chaîne 17 ; alors que dans le chemin de câbles 11, les fils de trame 18 sont disposés du côté interne.

Cet agencement offre l'avantage, pour le système d'encliquetage 35 et pour le système d'encliquetage 36, de ne pas produire de saillie interne au chemin de câbles 11, puisque les crans de retenue 38 sont du côté externe et que les organes d'appui 37 sont du côté interne du fil de chaîne 17 dans un encombrement n'allant pas au-delà du fil de trame 18.

Pour le système d'encliquetage 35, l'organe d'appui 37 est formé par une portion d'extrémité d'un crochet.

Pour le système d'encliquetage 36, l'organe d'appui 37 est formé par un pontet s'étendant entre les deux crans de retenue 38.

Cette conformation des organes d'appui 37 permet de mettre en place l'attache 13 en la déplaçant suivant la direction transversale par un mouvement de l'extérieur vers l'intérieur pour la mettre dans une position où elle est plus haute que sa position verrouillée illustrée sur les dessins et à l'écart du fil de trame 18. Lorsque l'organe d'appui 37 du système d'encliquetage 35 est au-delà du fil de chaîne 17, l'attache 13 peut être abaissée jusque ce que la partie en crochet auquel appartient l'organe d'appui 37 du système d'encliquetage 35 et que l'organe d'appui 37 du système d'encliquetage 36 reposent chacun sur un fil de chaîne 17. L'attache 13 peut alors être glissée le long des fils de chaîne 17 jusqu'à engager les crans de retenue 38 sur le fil de trame 18.

En outre des systèmes d'encliquetage 35 et 36 sur des fils du chemin de câbles 11, qui permettent d'assujettir rigidement l'attache 13 à ce chemin de câbles, l'attache 13 comporte des crochets d'encliquetage 39 et 40 pour l'assujettir au bandeau coudé 12.

Le crochet d'encliquetage 39 est configuré pour recevoir la nervure 33. Le crochet d'encliquetage 40 est configuré pour recevoir la nervure 34.

La nervure 33 a un profil en cornière et présente à son extrémité distale un bourrelet 41.

La nervure 34 a un profil droit et présente à son extrémité distale un bourrelet 42.

Les crochets d'encliquetage 39 et 40 se trouvent aux extrémités de l'attache 13.

Pour mettre en place le bandeau coudé 12 sur l'attache 13, on insère d'abord à force le bourrelet 41 de la nervure 33 dans le crochet d'encliquetage 39, puis l'on fait pivoter autour du bourrelet 41 le bandeau coudé 12 pour insérer le bourrelet 42 de la nervure 34 dans le crochet d'encliquetage 40.

Ici, le crochet d'encliquetage 39 et le système d'encliquetage 35 sont alignés horizontalement ; et le crochet d'encliquetage 40 et le système d'encliquetage 36 sont alignés verticalement.

Ainsi que déjà indiqué, les bandeaux coudés 12 sont identiques et disposés tête-bêche, de sorte que chaque bandeau coudé 12 a une disposition qui est l'image miroir de l'autre bandeau coudé 12.

Il en va de même pour les attaches 13 servant à fixer l'un des bandeaux coudés 12 et les attaches 13 servant à fixer l'autre bandeau coudé 12.

L'ensemble de cheminement 12 présente ainsi de chaque côté latéral un agencement qui est l'image miroir de l'agencement de l'autre côté latéral.

La paroi principale 30, et plus généralement le bandeau coudé 12, enveloppe extérieurement le chemin de câbles 11 au droit de l'aile latérale 16 à laquelle le bandeau coudé 12 est fixé et au droit d'une partie du fond 15 à partir de cette aile latérale 16.

Ici, l'écart entre les deux bandeaux coudés 12 est de l'ordre de 80 mm et la largeur du chemin de câbles 11 est de l'ordre de 300 mm.

Chaque partie du fond 15 au droit de laquelle se trouve un bandeau coudé 12 a donc une largeur, à partir de l'aile latérale 16 à laquelle est fixée ce bandeau coudé 12, qui est de l'ordre de 110 mm.

Ici, le côté longitudinal supérieur de la paroi principale 30 du bandeau coudé 12, auquel se raccorde le retour 31, est au-dessus du bord de rive 19 du chemin de câble 11.

Ainsi, le bandeau coudé 12 est au droit de la totalité de l'aile latérale 16 à laquelle il est fixé.

Ici, le bandeau coudé 12 est courbé entièrement, c'est-à-dire que la paroi principale 30 est courbée entièrement depuis son côté longitudinal supérieur, auquel se raccorde le retour 31, jusqu'à son côté longitudinal inférieur, auquel se raccorde le retour 32.

La paroi principale 30 a donc un profil très différent de la portion de chemin de câble au droit de laquelle elle se trouve (dans le chemin de câbles 11, l'aile latérale 16 et le fond 15 sont droits et disposés transversalement l'un par rapport à l'autre).

En raison de cette différence de profil et en raison de l'agencement des crochets d'encliquetage 39 et 40 des attaches 13, il existe une distance relativement importante entre la paroi principale 30 du bandeau coudé 12 et le chemin de câbles 11.

On observera en particulier que la portion du bandeau coudé 12 en porte-à-faux entre la nervure 34 et le retour 32 est relativement éloignée du fond 15.

La portion médiane du fond 15 qui n'est pas enveloppée par l'habillage formé par les deux bandeaux coudés 12 est disponible pour servir de support de fixation à des appareils électriques, par exemple le détecteur de fumées 45 et le luminaire à tubes luminescents 46 montrés sur la figure 5.

Pour la fixation du détecteur de fumées 45, du luminaire 46 ou d'un autre appareil électrique, on utilise par exemple un élément de montage tel que décrit dans la demande de brevet français 2 716 768 pour servir d'interface entre le chemin de câbles 11 et l'appareil électrique à fixer sur ce chemin de câbles.

L'ensemble de cheminement de câbles 10 offre ainsi un aspect visuel procuré essentiellement par l'habillage formé par les deux bandeaux coudés 12, tout en préservant la possibilité, comme les chemins de câbles nus, de servir de support à des appareils électriques ou autres accessoires.

L'ensemble de cheminement de câbles 10 est prévu pour rester visible, y compris dans des locaux tertiaires, et non pour être caché derrière un faux plafond.

On observera que la portion en porte-à-faux des bandeaux coudés 12 située entre la nervure 34 et le retour 32 peut servir pour loger des câbles électriques ou analogues desservant les appareils électriques fixés au chemin de câbles 11.

On notera que chaque attache 13 comporte une pince 47 (figure 4) pouvant servir à loger des câbles électriques ou analogues desservant les appareils électriques fixés au chemin de câbles 11.

Chaque attache 13 présente également une ouverture 48 de passage d'un collier de fixation de câbles ou analogues à proximité de la pince 47 et une ouverture 49 semblable au voisinage du système d'encliquetage 35 et du crochet d'encliquetage 39.

Comme déjà indiqué, chaque bandeau coudé 12 s'étend entre deux consoles 20 ou organe de support analogue ; ou encore accessoire de changement de direction.

Les bandeaux 12 sont par exemple fournis en différentes longueurs prédéterminées tel que 400 mm, 900 mm, 1400 mm et 1900 mm.

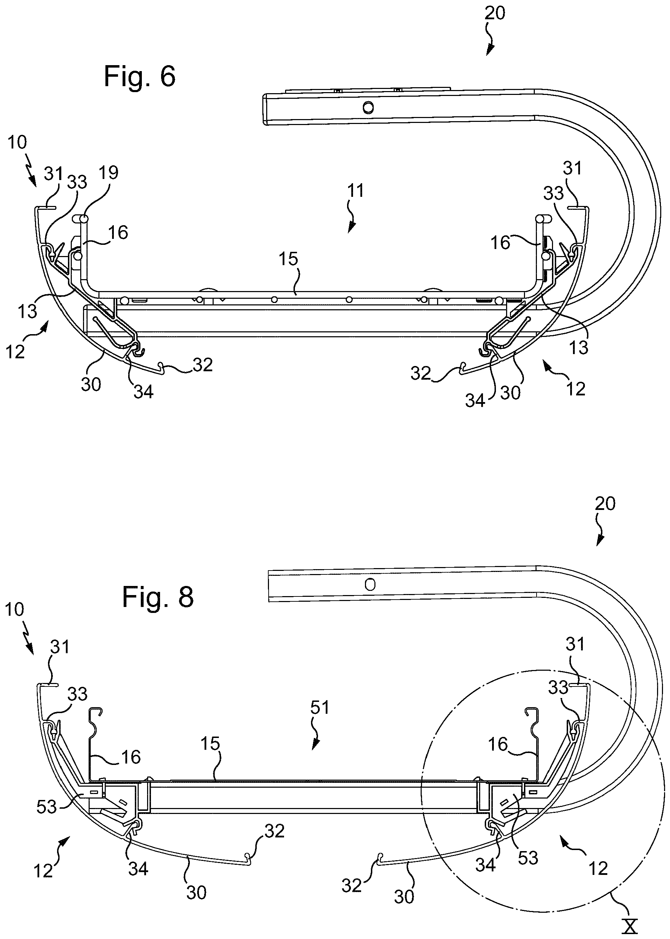

Dans la variante de l'ensemble de cheminement 10 illustrée sur la figure 6, les bandeaux coudés 12 sont identiques si ce n'est qu'ils enveloppent le fond 15 du chemin de câbles 11 sur une partie plus petite à partir de l'aile latérale 16 (la portion en porte-à-faux entre la nervure 34 et le retour 32 est plus courte).

Ici, l'écart entre les deux bandeaux coudés 12 est de l'ordre de 190 mm.

Ainsi, chaque partie du fond 15 au droit de laquelle se trouve un bandeau coudé 12 à une largeur, à partir de l'aile latérale 16 à laquelle est fixée ce bandeau coudé 12, qui est de l'ordre de 55 mm.

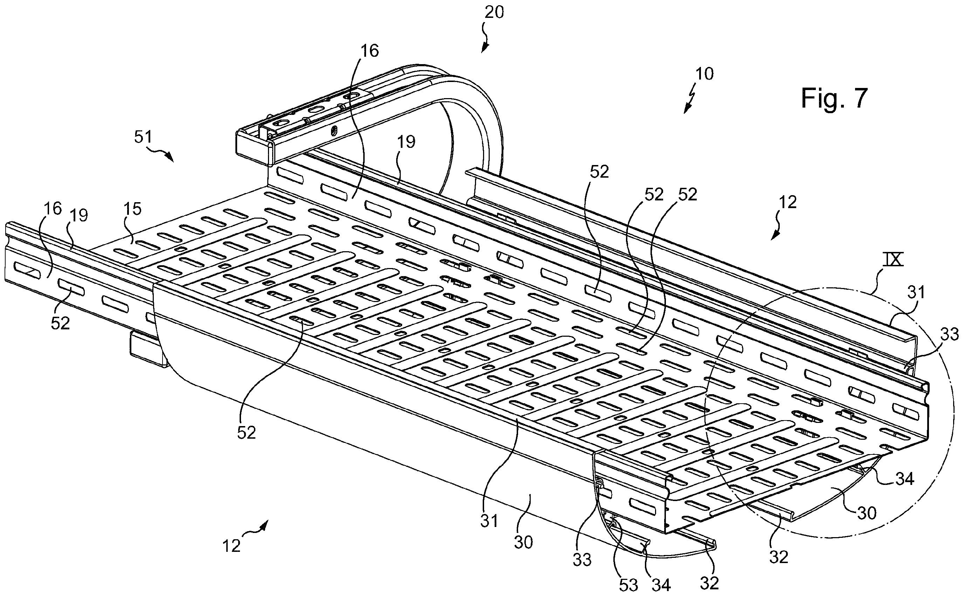

Dans la variante de l'ensemble de cheminement de câbles 10 illustrée sur les figures 7 à 10, le chemin de câbles 11 en treillis de fils métalliques est remplacé par un chemin de câbles 51 en tôle métallique perforée, et les attaches 13 configurées pour coopérer avec un treillis de fils métalliques sont remplacées par des attaches 53 configurées pour coopérer avec une tôle perforée.

De même que le chemin de câbles 11 en treillis de fils métalliques, le chemin de câbles 51 en tôle perforée est un chemin de câbles conventionnel à profil en U dont les parois, en l'occurrence un fond 15 et deux ailes latérales 16, sont ajourées.

Les ajours du fond 15 et des ailes latérales 16 sont formés par des ouvertures 52.

Ici, les ouvertures 52 sont des ouvertures allongées orientées suivant la direction longitudinale, avec une rangée d'ouvertures 52 alignées ménagée dans chaque aile latérale et une pluralité de rangées d'ouvertures 52 alignées ménagées dans le fond 15.

Ici, dans le fond 15, la rangée d'ouvertures 52 la plus proche de l'une et l'autre des ailes latérales 16 et la rangée d'ouvertures 52 voisine sont décalées longitudinalement de sorte que de chaque côté du fond 15, les ouvertures 52 de la rangée la plus proche de l'aile latérale 16 et les ouvertures 52 de la rangée voisine sont disposées en quinconce.

De même que le chemin de câbles 11, dans le chemin de câbles 51 chaque aile latérale 16 s'achève à l'opposé du fond 15 par un bord de rive 19, ici formé par un retour de la tôle.

De même que les attaches 13, les attaches 53 sont en matière rigide mais avec une certaine élasticité, ici une matière plastique moulée.

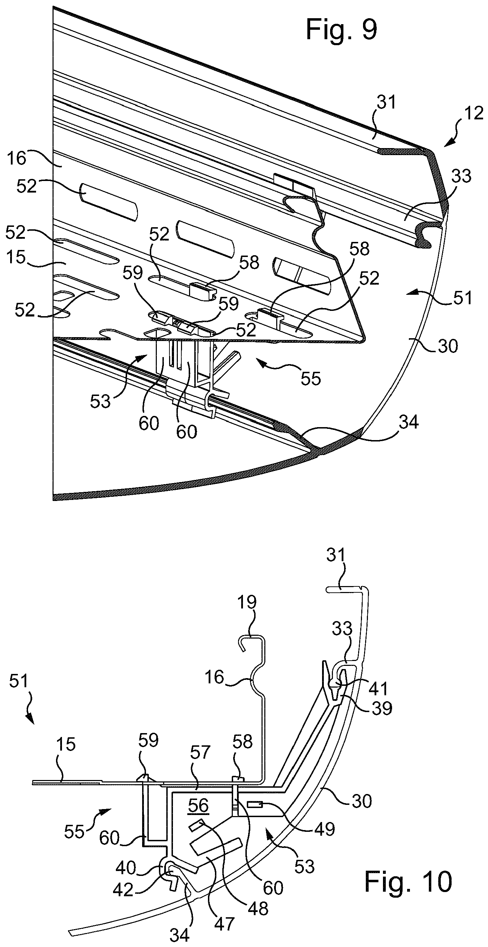

On va maintenant décrire plus en détails l'attache 53, à l'appui des figures 9 et 10.

L'attache 53 est configurée, de même que l'attache 13, pour se prendre, d'une part, sur le chemin de câbles, ici le chemin de câbles en tôle perforée 51, et d'autre part, sur les nervures 33 et 34 du bandeau coudé 12.

Pour l'assujettissement entre l'attache 53 et le bandeau coudé 12, l'attache 53 comporte des crochets d'encliquetage 39 et 40 semblables aux crochets d'encliquetage 39 et 40 de l'attache 13.

Pour l'assujettissement entre l'attache 53 et le chemin de câbles 51, l'attache 53 comporte un système d'encliquetage 55 pour se prendre sur une paroi du chemin de câbles 51, ici sur le fond 15.

Plus précisément, le système d'encliquetage 55 comporte un organe d'appui 57 sur le fond 15 et des crans de retenue 58 et 59 sur le voisinage de certaines ouvertures 52 du fond 15.

Chaque cran de retenue 58 et 59 prend racine sur l'extrémité distale d'une patte flexible 60 et s'étend suivant la direction transversale. Le sens d'extension des crans de retenue 58 est l'inverse du sens d'extension des crans de retenue 59.

Ici, il y a deux crans de retenue 58 chacun prévu pour passer respectivement au travers d'une ouverture 52 de la rangée la plus proche d'une aile latérale 16 et au travers d'une ouverture voisine 52 de cette même rangée ; et il y a deux crans 59 tous deux prévus pour passer au travers d'une même ouverture 52 de la rangée voisine.

Ici, les crans de retenue 58 s'étendent vers l'aile latérale 16 la plus proche et les crans de retenue 59 s'étendent vers l'opposé de cette aile latérale 16.

Les pattes flexibles 60 portant les crans de retenue 58 et les pattes flexibles 60 portant les crans de retenue 59 sont configurées pour fléchir élastiquement les unes vers les autres pour permettre le passage des crans 58 et 59 dans les ouvertures 52 susmentionnées puis pour se détendre lorsque les crans 58 et 59 sont passées au travers de ces ouvertures et que l'organe d'appui 57 est contre le fond 15.

Le système d'encliquetage 55 fixe alors rigidement l'attache 53 sur le chemin de câbles 51.

Ici, l'attache 53 est configurée pour que les crans de retenue 58 et 59 soient disposés du côté interne du fond 15 et pour que l'organe d'appui 57 soit disposé du côté externe du fond 15.

Avec cet agencement, seuls les crans de retenue 58 et 59, qui sont de petites dimensions, saillent du côté interne du chemin de câbles 51.

L'organe d'appui 57 est formé par une paroi d'une platine 56. Les pattes flexibles 60 portant les crans de retenue 58 sont disposées latéralement de part et d'autre de la platine 56. Les pattes flexibles 61 portant les crans de retenue 59 sont disposées côte-à-côte en bout de la platine 56.

L'attache 53, de même que l'attache 13, comporte une pince 47 pour loger des câbles électriques ou analogues et des ouvertures 48 ou 49 pour le passage d'un collier de fixation de câbles ou analogues.

L'attache 53 est mise en place en la déplaçant suivant la direction verticale par un mouvement de rapprochement vers la zone du fond 15 où se trouvent les ouvertures 52 susmentionnées avec les crans de retenue 58 et 59 tournés vers le fond 15, puis en faisant passer les crans de retenue 58 et 59 au travers de ces ouvertures 52. Comme indiqué ci-dessus, lorsque les crans de retenue 58 et 59 sont passés au travers des ouvertures 52, l'attache 53 est alors fixée rigidement au chemin de câbles 51.

Le bandeau coudé 12 se met en place sur les attaches 53 de la même façon que sur les attaches 13.

D'une façon générale, les dimensions du chemin de câbles 51 sont semblables aux dimensions du chemin de câbles 11 ; et les attaches 53 positionnent les bandeaux coudés 12 vis-à-vis du chemin de câbles 51 de la même façon que les attaches 13 positionnent les bandeaux coudés 12 vis-à-vis du chemin de câbles 11.

Dans une variante non illustrée de l'ensemble de cheminement 10 comportant le chemin de câbles 51, les bandeaux coudés 12 sont remplacés par des bandeaux coudés 12 identiques à ceux illustrés sur la figure 6, c'est-à-dire qu'ils enveloppent le fond 15 du chemin de câbles 51 sur une partie plus petite à partir de l'aile latérale 16 (la portion en porte-à-faux entre la nervure 34 et le retour 32 est plus courte).

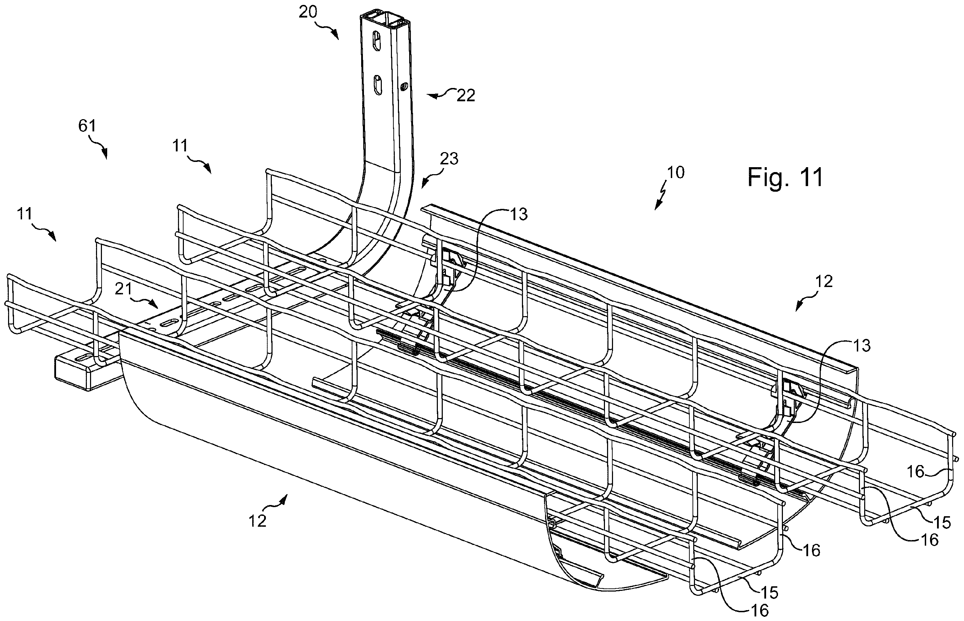

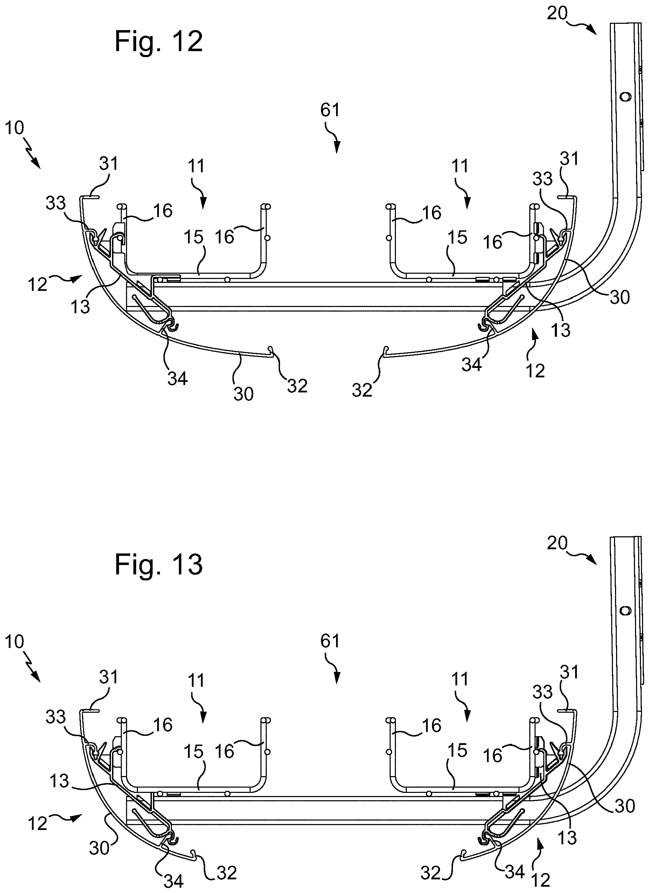

Dans la variante illustrée sur les figures 11 et 12, l'ensemble de cheminement 10 est semblable à l'ensemble de cheminement 10 illustré sur les figures 1 à 5, si ce n'est que le chemin de câbles 11 est remplacé par un dispositif de cheminement de câbles 61 formé par deux chemins de câbles 11 disposés côte à côte, chacun semblable au chemin de câbles 11 de l'ensemble de cheminement 10 illustré sur les figures 1 à 5, si ce n'est qu'il est plus étroit.

Alors que le chemin de câbles 11 de l'ensemble de cheminement 10 illustré sur les figures 1 à 5 a une largeur de l'ordre de 300 mm, dans le dispositif de cheminement 61, chacun des deux chemins de câbles 11 a une largeur de l'ordre de 100 mm.

En outre, la console 20 configurée pour être fixée à une structure telle qu'un plafond est remplacée par une console 20 configurée pour être fixée à une structure telle qu'un mur.

Le coude 23 est courbé suivant un arc de cercle sur environ 90° (et non 180°) de sorte que la portion 22 est orientée transversalement (et non parallèlement) à la portion 21.

La portion 22 est relativement courte, afin que la portion 21 puisse être relativement proche du plafond.

Dans le dispositif de cheminement 61, pour chaque chemin de câbles 11, aucun bandeau coudé 12 n'est fixé du côté interne, c'est-à-dire du côté de l'autre chemin de câbles, c'est seulement du côté externe qu'est fixé un bandeau coudé 12.

Vu les dimensions indiquées ci-dessus, et comme on le voit sur la figure 12, pour chaque chemin de câbles 11 du dispositif de cheminement 61, le bandeau coudé 12 est au droit de la totalité du fond 15.

Les deux chemins de câbles 11 sont à l'écart l'un de l'autre, de sorte qu'il existe entre les deux bandeaux coudés 12 un écart semblable à l'écart existant entre les bandeaux coudés 12 de l'ensemble de cheminement 10 illustré sur les figures 1 à 5.

Les deux chemins de câbles 11 sont par exemple posés sur les consoles 20 ou analogues avec un gabarit d'écartement et/ou on se sert de repères de positionnement marqués sur les consoles 20 ou analogues.

D'une façon générale, dans l'ensemble de cheminement 10 illustré sur les figures 11 et 12, l'habillage formé par les deux bandeaux coudés 12 est disposé vis-à-vis du dispositif de cheminement 61 de la même façon que vis-à-vis du chemin de câbles 11 de l'ensemble de cheminement 10 illustré sur les figures 1 à 5 : l'habillage formé par les deux bandeaux coudés 12 enveloppe extérieurement chaque côté latéral du dispositif de cheminement 61, formé par l'aile latérale 16 externe respectivement de l'un et de l'autre des chemins de câbles 11, et enveloppe extérieurement, partiellement, le côté bas du dispositif de cheminement 61, formé par le fond 15 de l'un et de l'autre des chemins de câbles 11 et par l'espace existant entre ces fonds 15.

On observera que le chemin de câbles 11 unique de l'ensemble de cheminement 10 illustré sur les figures 1 à 5 ou sur la figure 6, de même que le chemin de câbles 51 unique l'ensemble de cheminement 10 illustré sur les figures 7 à 10, constitue un dispositif de cheminement de câbles dont chaque côté latéral est formé respectivement par l'une et par l'autre des ailes latérales 16 et dont le côté bas est formé par le fond 15.

Dans la variante de l'ensemble de cheminement 10 comportant le dispositif de cheminement 61 illustrée sur la figure 13, les bandeaux coudés 12 sont identiques à ceux illustrés sur la figure 6, c'est-à-dire avec la portion en porte-à-faux entre la nervure 34 et le retour 32 qui est plus courte.

Les bandeaux coudés 12 enveloppent donc le côté bas du dispositif de cheminement 61 sur une partie plus petite à partir des côtés latéraux ; et pour chaque chemin de câbles 11, le fond 15 est enveloppé par un bandeau coudé 10 sur seulement une partie à partir de l'aile latérale 16 externe.

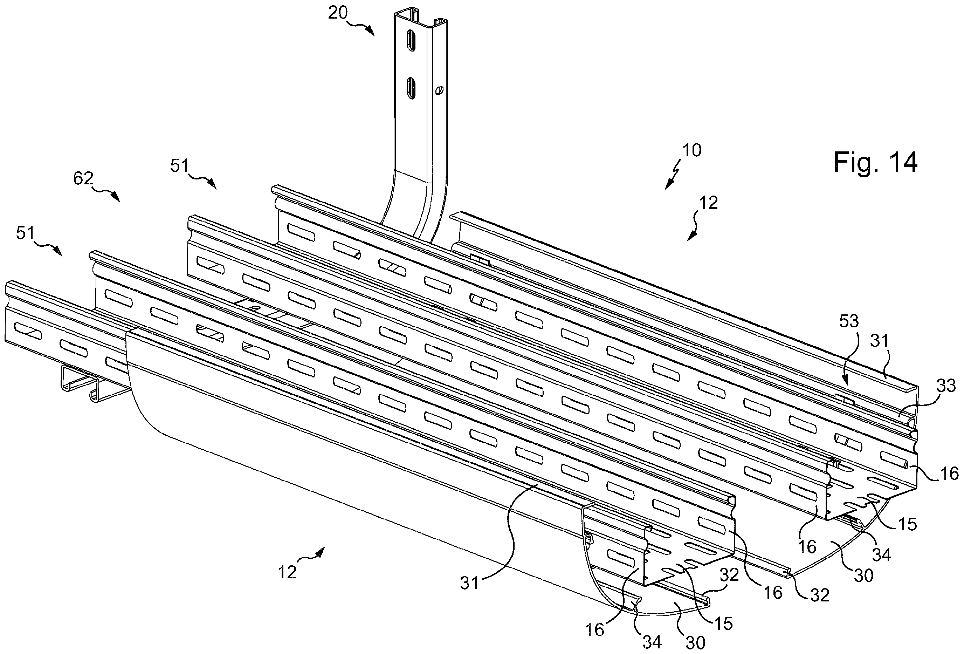

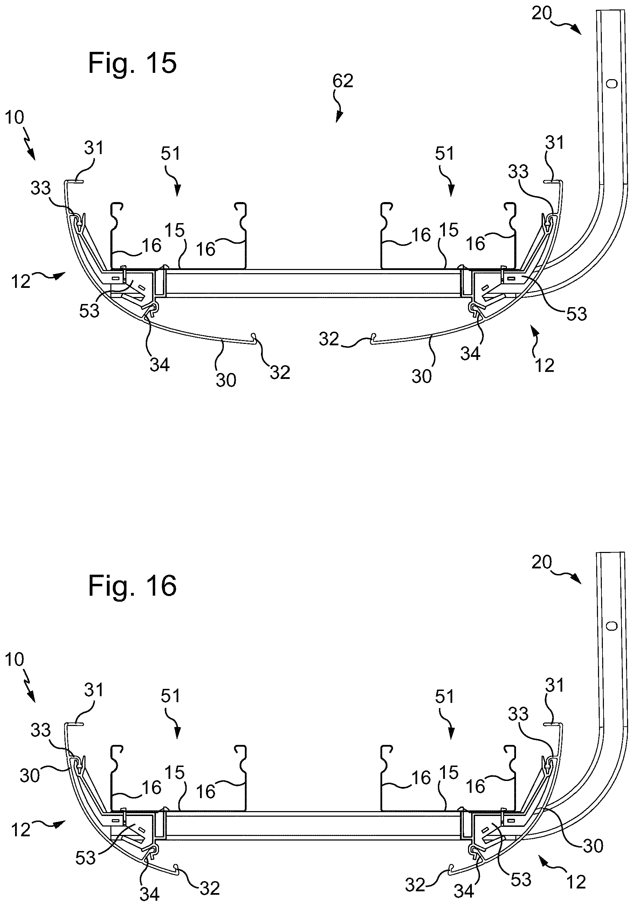

Dans la variante illustrée sur les figures 14 et 15, l'ensemble de cheminement 10 est semblable à l'ensemble de cheminement 10 illustré sur les figures 11 et 12, si ce n'est que le dispositif de cheminement de câbles 61 formé par deux chemins de câbles 11 en treillis de fils métalliques est remplacé par un dispositif de cheminement de câbles 62 formé par deux chemins de câbles 51 en tôle perforée, chacun semblable au chemin de câbles 51 de l'ensemble de cheminement 10 illustré sur les figures 7 à 10, si ce n'est qu'il est plus étroit.

Alors que le chemin de câbles 51 de l'ensemble de cheminement 10 illustré sur les figures 7 à 10 a une largeur de l'ordre de 300 mm, dans le dispositif de cheminement 62 chacun des deux chemins de câbles 51 a une largeur de l'ordre de 100 mm.

D'une façon générale, les dimensions du dispositif de cheminement 62 sont semblables aux dimensions du dispositif de cheminement 61, et les attaches 53 positionnent les bandeaux coudés 12 vis-à-vis du dispositif de cheminement 62 de la même façon que les attaches 13 positionnent les bandeaux coudés 12 vis-à-vis du dispositif de cheminement 61.

La partie médiane du côté bas du dispositif de cheminement 61 (figures 11 et 12) ou du dispositif de cheminement 62 (figures 14 et 15), qui n'est pas enveloppée par l'habillage formé par les deux bandeaux coudés 12, est disponible pour le montage d'appareils électriques tels que le détecteur de fumées 45 et le luminaire à tubes luminescents 46 montrés sur la figure 5.

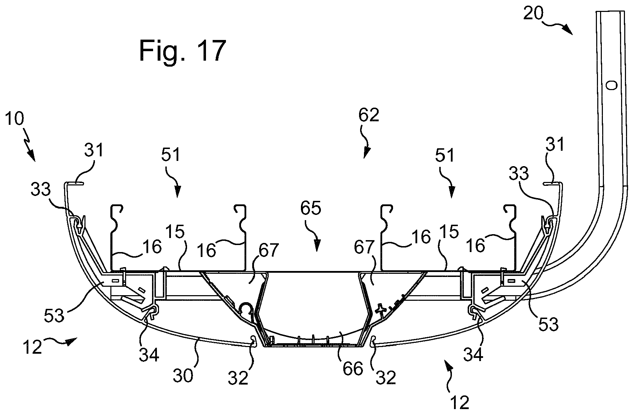

Pour la fixation de ces appareils électriques, on utilise par exemple l'élément de montage 65 montré sur la figure 17, pour servir d'interface entre le dispositif de cheminement 61 ou le dispositif de cheminement 62 et l'appareil électrique à fixer.

La description qui suit de l'élément de montage 65 est donnée pour le dispositif de cheminement 62 à l'appui de la figure 17, mais il est entendu que cette description vaut également pour le dispositif de cheminement 61 à condition de remplacer les références aux chemins de câbles 51 par des références aux chemins de câbles 11.

L'élément de montage 65 est configuré pour se prendre sur l'un et l'autre des deux chemins de câbles 51, ici sur leurs fonds 15.

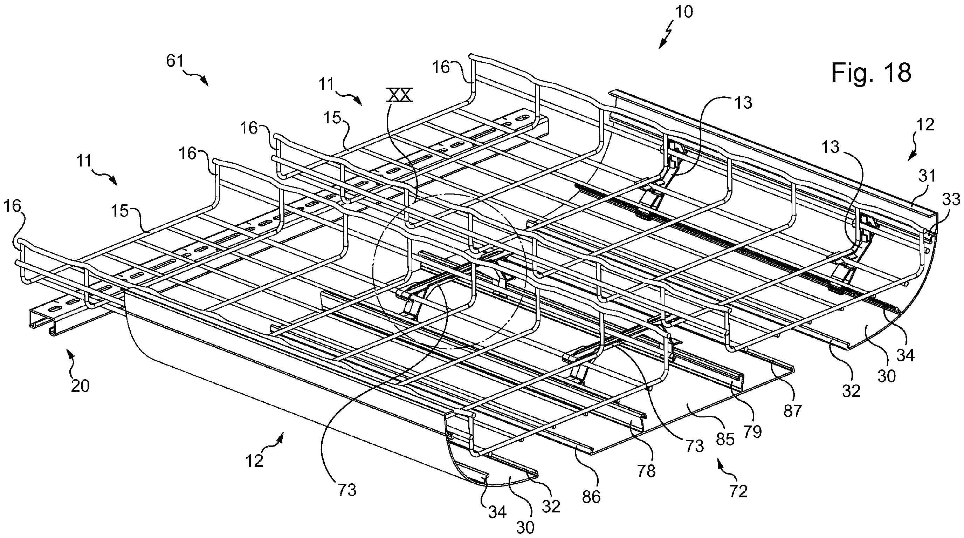

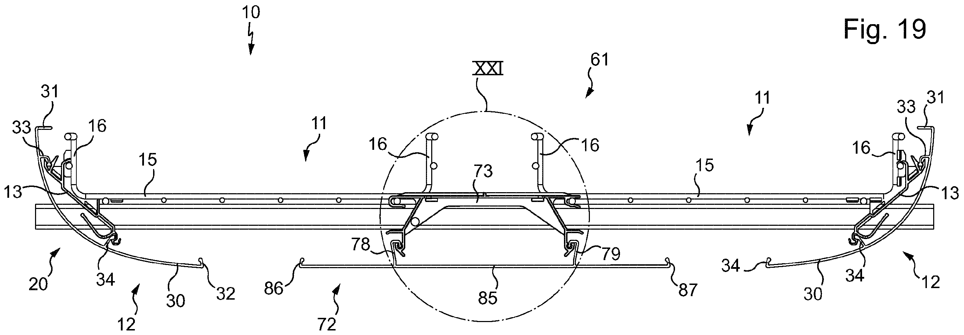

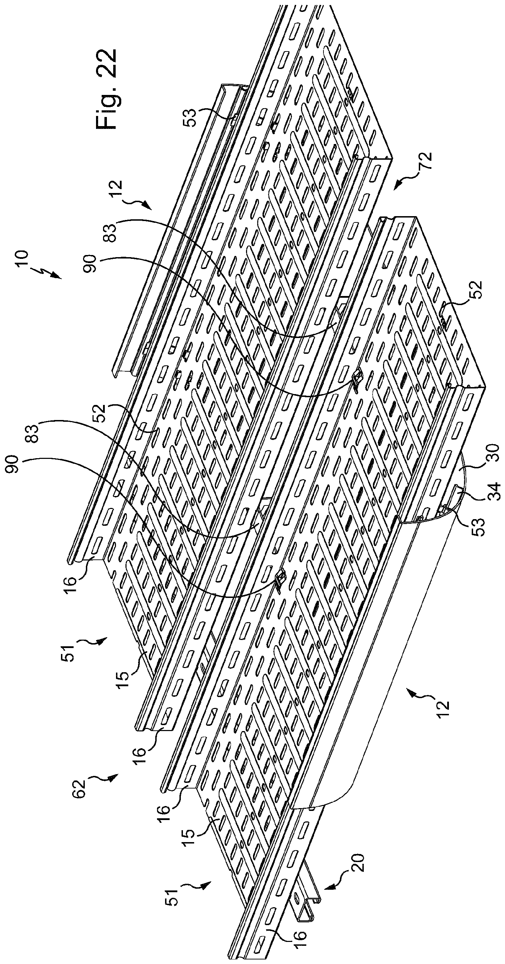

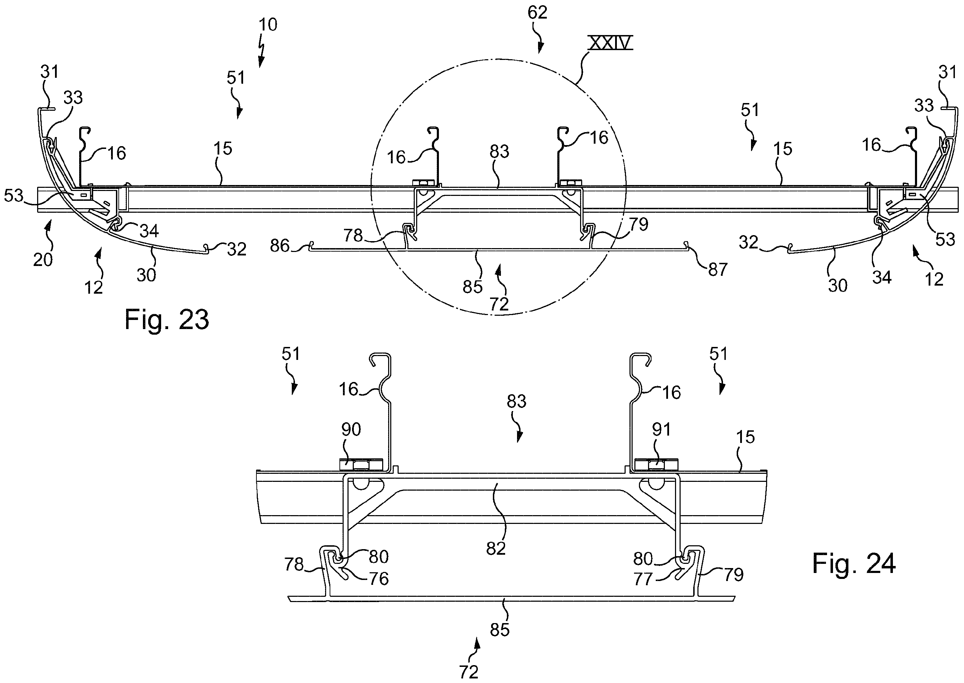

L'élément de montage 65 comporte un corps central 66 et deux rebords 67 disposés de part et d'autre du corps central 66, chacun configuré pour être fixé sur le fond 15 respectivement de l'un et de l'autre des chemins de câbles 51 par des organes de fixation non représentés, par exemple semblables aux organes de fixation de l'attache 83 illustrée sur les figures 22 à 24 (attache 73 illustrée sur les figures 18 à 21 si les chemins de câbles 51 sont remplacés par des chemins de câbles 11).

Le corps central 66 est configuré pour servir de support de fixation à l'appareil électrique à monter.

Ici, le corps central 66 et les rebords 67 sont conformés chacun en caisson ; chaque rebord 67 présente une paroi supérieure formant un organe d'appui sur le fond 15 d'un des chemins de câbles 51 ; et le corps central 66 comporte une paroi inférieure à fleur des bandeaux coudés 12.

Dans la variante illustrée sur la figure 16, l'ensemble de cheminement 10 est semblable à l'ensemble de cheminement 10 illustré sur les figures 14 et 15, si ce n'est que les bandeaux coudés 12 sont remplacés par des bandeaux coudés 12 identiques à ceux illustrés sur la figure 6.

L'habillage formé par ces bandeaux coudés 12 et donc positionné vis-à-vis du dispositif de cheminement 62 de la même façon que l'habillage de la figure 13 est positionné vis-à-vis du dispositif de cheminement 61.

Pour la fixation d'appareils électriques sur l'ensemble de cheminement 10 illustré sur la figure 13 ou sur l'ensemble de cheminement 10 illustré sur la figure 16, on peut utiliser l'élément de montage 65 se prenant sur les deux chemins de câbles 11 (figure 13) ou 51 (figure 16) ; ou opérer la fixation de l'appareil électrique sur un seul des chemins de câbles.

Dans la variante illustrée sur les figures 18 à 21, l'ensemble de cheminement 10 est semblable à l'ensemble de cheminement 10 illustré sur les figures 11 et 12, si ce n'est que :
- dans le dispositif de cheminement de câbles 61, les deux chemins de câbles 11 sont identiques au chemin de câbles 11 de l'ensemble de cheminement 10 illustré sur les figures 1 à 5, c'est-à-dire ayant une largeur de l'ordre de 300 mm (et non de l'ordre de 100 mm comme dans le dispositif de cheminement 61 de l'ensemble de cheminement 10 illustré sur les figures 11 et 12); et
- l'habillage du dispositif de cheminement 61 comporte, en outre des deux bandeaux coudés 12, un bandeau droit 72 disposé entre les deux bandeaux coudés 12.

En outre, la console 20 configurée pour être fixée à une structure telle qu'un mur est remplacée par un rail droit 20 configuré pour être relié à une structure telle qu'un plafond par des organes de suspension bien connus tels que des filins ou des tiges métalliques.

Les deux chemins de câbles 11 du dispositif de cheminement 61 illustré sur les figures 18 à 21 sont distants l'un de l'autre avec le même écart que les chemins de câbles 11 du dispositif de cheminement 61 illustré sur les figures 11 et 12.

La fixation entre le bandeau droit 72 et les chemins de câbles 11 s'effectue grâce à une attache 73 qui sera décrite en détail ultérieurement.

Lorsque le bandeau droit 72 est en place, il est aligné avec les bandeaux coudés 12, et plus précisément avec le côté longitudinal inférieur de chaque paroi principale 30.

Le bandeau droit 72 est disposé centré entre les deux bandeaux coudés 12, de sorte que de chaque côté du bandeau droit 72, il existe le même écart avec le bandeau coudé 12 correspondant.

Ici, le bandeau droit 72 a une largeur de l'ordre de 320 mm et l'écart entre le bandeau droit 72 et chaque bandeau coudé 12 est de l'ordre de 80 mm.

Ainsi, dans l'ensemble de cheminement 10 illustré sur les figures 18 à 21, l'écart entre chaque bandeau coudé 12 et le bandeau droit 72 est semblable à l'écart entre les deux bandeaux coudés 12 de chacun des ensembles de cheminement 10 illustrés respectivement sur les figures 1 à 5, sur les figures 8 à 10, sur les figures 11 et 12, et sur les figures 14 et 15.

Dans l'ensemble de cheminement 10 illustré sur les figures 18 à 21, l'habillage formé par les deux bandeaux coudés 12 et par le bandeau droit 72 enveloppe extérieurement chaque côté latéral du dispositif de cheminement 61, formé par l'aile latérale externe 16 de l'un et de l'autre des chemins de câbles 11, et enveloppe extérieurement, partiellement, le côté bas du dispositif de cheminement 61, formé par le fond 15 de l'un et de l'autre des chemins de câbles 11 et par l'espace existant entre ces fonds 15.

Le bandeau droit 72 enveloppe ce dispositif de cheminement 61 au droit de la zone à cheval entre les chemins de câbles 11 et sur une partie du fond 15 de chacun des deux chemins de câbles 11 à partir de l'aile latérale 16 interne.

D'une façon générale, l'habillage formé par les deux bandeaux coudés 12 et par le bandeau droit 72 enveloppe extérieurement le dispositif de cheminement 61 illustré sur les figures 18 à 21 du côté bas sauf uniquement au droit de la partie médiane du fond 15 de chaque chemin de câbles 11.

De même que l'attache 13 et l'attache 53, l'attache 73 est en matière rigide mais avec une certaine élasticité, ici une matière plastique moulée.

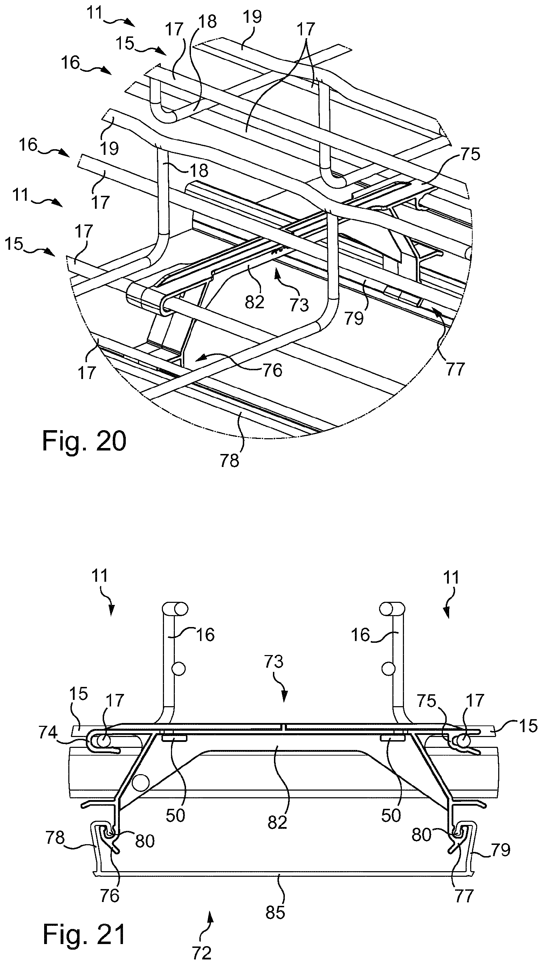

On va maintenant décrire plus en détail l'attache 73, à l'appui des figures 20 et 21.

L'attache 73 comporte quatre crochets d'encliquetage 74, 75, 76 et 77, portés par un corps 82 conformé en U.

Les crochets d'encliquetage 74 et 75 sont alignés horizontalement. Ils servent à l'assujettissement entre l'attache 73 et les chemins de câbles 11.

Les crochets 76 et 77 sont alignés horizontalement. Ils servent à l'assujettissement entre l'attache 73 et le bandeau droit 72.

Le crochet d'encliquetage 74 est configuré pour recevoir un fil de chaîne 17 du fond 15 de l'un des chemins de câbles 11, en l'occurrence le fil de chaîne 17 le plus proche de l'aile latérale interne 16 de ce chemin de câbles 11.

Le crochet d'encliquetage 75 est configuré pour recevoir le fil de chaîne 17 semblable de l'autre chemin de câbles 11.

On observera que les crochets d'encliquetage 74 et 75 sont ouverts du même côté (à droite sur la figure 21), de sorte que l'attache 73 peut être mise en place sur les chemins de câbles 11 en positionnant le côté ouvert des crochets 74 et 75 devant le fil de chaîne 17 qu'ils doivent recevoir puis en déplaçant transversalement l'attache 73 pour faire pénétrer ces fils de chaîne 17 dans les crochets d'encliquetage 74 et 75.

Le bandeau droit 72 comporte une paroi principale 85. Du côté prévu pour être tourné vers les chemins de câbles, le bandeau droit 72 comporte :
- un retour 86 et un retour 87 chacun raccordé par un côté longitudinal à un côté longitudinal respectif de la paroi principale 85; et
- une nervure 78 et une nervure 79, s'étendant chacune longitudinalement, avec la nervure 78 qui est située entre le retour 86 et la nervure 79, et avec la nervure 79 qui est située entre la nervure 78 et le retour 87.

Chacune des nervures 78 et 79 a un profil en cornière et présente à son extrémité distale un bourrelet 80.

Les nervures 78 et 79 sont conformées en image miroir l'une de l'autre, avec le bourrelet 80 de la nervure 78 qui est tourné vers le bourrelet 80 de la nervure 79.

Pour mettre en place le bandeau droit 72 sur l'attache 73, on fait pénétrer à force le bourrelet 80 de la nervure 78 dans le crochet d'encliquetage 76 et le bourrelet 80 de la nervure 79 dans le crochet d'encliquetage 77.

On notera que si le bandeau droit 72 est placé tête-bêche, le crochet d'encliquetage 76 peut recevoir la nervure 79 tandis que le crochet d'encliquetage 77 peut recevoir la nervure 78.

Chaque espace situé entre un bandeau coudé 12 et le bandeau droit 72 s'utilise de la même façon que l'espace situé entre les deux bandeaux 12 de l'ensemble de cheminement 10 illustré sur les figures 1 à 5.

On observera que chaque portion en porte-à-faux du bandeau droit 72 située respectivement entre la nervure 78 et le retour 86, et entre la nervure 79 et le retour 87 peut servir pour loger des câbles électriques desservant les appareils électriques fixés aux chemins de câbles 11.

On notera que l'attache 73 présente des ouvertures 50 pour le passage d'un collier de fixation de câbles électriques ou analogues.

Dans une variante non illustrée de l'ensemble de cheminement 10 des figures 18 à 21, les bandeaux coudés 12 sont remplacés par des bandeaux coudés 12 identiques à ceux illustrés sur la figure 6 (portion en porte-à-faux entre la nervure 34 et le retour 32 plus courte) et de même le bandeau droit 72 est remplacé par un bandeau moins large.

Dans la variante illustrée sur les figures 22 à 24, l'ensemble de cheminement 10 est semblable à l'ensemble de cheminement 10 illustré sur les figures 14 et 15, si ce n'est que :
- dans le dispositif de cheminement de câbles 62, les deux chemins de câbles 51 sont identiques au chemin de câbles 51 de l'ensemble de cheminement 10 illustré sur les figures 7 à 10, c'est-à-dire ayant une largeur de l'ordre de 300 mm (et non de l'ordre de 100 mm comme dans le dispositif de cheminement 61 de l'ensemble de cheminement 10 illustré sur les figures 14 et 15) ; et
- l'habillage du dispositif de cheminement 62 comporte, de même que dans l'ensemble de cheminement 10 illustré sur les figures 18 à 21, un bandeau droit 72 disposé entre les deux bandeaux coudés 12.

La fixation du bandeau droit 72 sur les deux chemins de câbles en tôle perforée 51 s'effectue par une attache 83 semblable à attache 73, si ce n'est que les crochets d'encliquetage 74 et 75 sont remplacés par des trous de réception et par des organes de fixation présentant des languettes flexibles 90 et 91 configurées pour ne pas passer au travers des ouvertures 52 et présentant des tiges pour passer dans des ouvertures 52 et se verrouiller dans les trous de réception.

D'une façon générale, les dimensions du dispositif de cheminement 62 illustré sur les figures 22 à 24 sont semblables aux dimensions du dispositif de cheminement 61 illustré sur les figures 18 à 21, les attaches 53 positionnent les bandeaux coudés 12 vis-à-vis du dispositif de cheminement 62 de la même façon que les attaches 13 positionnent les bandeaux coudés 12 vis-à-vis du dispositif de cheminement 61, et les attaches 83 positionnent le bandeau droit 72 vis-à-vis du dispositif de cheminement 62 de la même façon que les attaches 73 positionnent le bandeau droit 72 vis-à-vis du dispositif de cheminement 61.

Dans une variante non illustrée de l'ensemble de cheminement 10 des figures 22 à 24, les bandeaux coudés 12 sont remplacés par des bandeaux coudés 12 identiques à ceux illustrés sur la figure 6 (portion en porte-à-faux entre la nervure 34 et le retour 32 plus courte) et de même le bandeau droit 72 est remplacé par un bandeau moins large.

Dans des variantes non illustrées :
- le bandeau 12 est remplacé par un bandeau coudé configuré différemment et/ou fixé différemment sur le chemin de câbles, mais toujours avec le côté longitudinal supérieur (côté tel que le côté longitudinal supérieur de la paroi principale 30) qui est à l'écart du bord de rive 19 du chemin de câbles ;
- le bandeau 12 est remplacé par un bandeau coudé configuré différemment et/ou fixé différemment sur le chemin de câbles, mais toujours avec une portion en porte-à-faux à l'écart du fond 15 du chemin de câbles ;
- le bandeau 12 est remplacé par un bandeau qui n'est pas entièrement courbé entre son côté longitudinal supérieur et son côté longitudinal inférieur, par exemple avec une paroi principale qui comporte une portion plate ou plusieurs portions plates et/ou un coude ou plusieurs coudes ;
- le bandeau droit 72 est remplacé par un bandeau dont la paroi principale est globalement droite, mais sans être strictement plate, par exemple avec des ondulations ;
- l'ensemble de cheminement comporte un seul chemin de câbles avec un seul bandeau coudé 12, par exemple avec l'une des ailes latérales du chemin de câbles qui est en regard d'un mur et le bandeau coudé 12 qui est en regard de l'autre aile latérale 16 ;
- l'ensemble de cheminement comporte un dispositif de cheminement formé par un chemin de câble en treillis de fils métalliques et par un chemin de câbles en tôle perforée disposés côte-à-côte ;
- l'ensemble de cheminement comporte davantage que deux chemins de câbles disposé côte-à-côte, par exemple trois chemins de câbles avec un bandeau droit tel que le bandeau 72 qui enveloppe le côté bas du dispositif de cheminement de câbles au droit de chaque zone à cheval entre deux chemins de câbles ;
- l'ensemble de cheminement est assujetti à une structure telle qu'un mur ou un plafond par d'autres organes que les consoles 20 ou le rail 20, par exemple par des tiges filetées, fixées à la structure telle qu'un plafond, se prenant sur des organes de fixation posés sur les chemins de câbles ;
- les appareils électriques fixés à l'ensemble de cheminement sont différents d'un détecteur de fumées ou d'un luminaire à tubes luminescents, par exemple des luminaires spots ;
- les attaches 13 sont conformées différemment, par exemple avec le système d'encliquetage 35 et le système d'encliquetage 36 qui sont combinés et/ou les crochets d'encliquetage 39 et 40 qui sont remplacés par d'autres organes d'accrochage tels que des pinces ;
- les attaches 53 sont différentes, par exemple avec les crans de retenue agencés avec un seul cran plus large à la place des deux crans de retenue 59 et/ou les crochets d'encliquetage 39 et 40 qui sont remplacés par d'autres organes d'accrochage tels que des pinces ;
- l'accrochage entre le bandeau coudé 12 et les attaches telles que 13 ou 53 se fait différemment, par exemple les nervures 33 et 34 sont remplacées par des rainures et les attaches telles que 13 ou 53 comportent des organes d'accrochage sur ces rainures ;
- les attaches 73 sont différentes, avec par exemple les crochets d'encliquetage 74 et 75 qui sont remplacés chacun par des systèmes d'encliquetage tels que les systèmes 35 et 36 de l'attache 13 et/ou les crochets d'encliquetage 76 et 77 qui sont remplacés par d'autres organes d'accrochage tels que des pinces ;
- les attaches 83 sont différentes, avec par exemple les organes comportant les languettes flexibles 90 et 91 qui sont remplacées chacun par des crans de retenue tels que les crans de retenue 58 et 59 de l'attache 53, venus de matière avec le reste de l'attache 83 ; et/ou
- l'accrochage entre le bandeau droit 72 et les attaches telles que 73 ou 83 se fait différemment, par exemple les nervures 78 et 79 sont remplacées par des rainures et les attaches telles que 73 ou 83 comportent des organes d'accrochage sur ces rainures.

De nombreuses autres variantes sont possibles en fonction des circonstances, et l'on rappelle à cet égard que l'invention ne se limite pas aux exemples décrits et représentés.

## Revendications

1. Ensemble de cheminement de câbles, comportant un chemin de câbles ajouré (11 ; 51) présentant un fond (15) et des ailes latérales (16), ledit ensemble (10) étant prévu pour être installé le long d'un plafond ; **caractérisé en ce qu'**il comporte en outre au moins un bandeau coudé (12) dont la face concave est tournée vers le chemin de câbles (11 ; 51) ainsi que des attaches (13 ; 53) servant à la fixation entre le chemin de câble (11 ; 51) et le bandeau coudé (12), lequel bandeau coudé (12) est fixé sur ledit chemin de câbles (11 ; 51) exclusivement par lesdites attaches (13 ; 53) et enveloppe extérieurement ledit chemin de câbles (11 ; 51) au droit d'une seule aile latérale (16) et au droit d'au moins une partie du fond (15) à partir de cette aile latérale (16).

2. Ensemble selon la revendication 1, **caractérisé en ce que** ledit bandeau coudé (12) comporte une paroi principale (30) et des nervures (33, 34) orientées longitudinalement, saillant de ladite paroi principale du côté concave dudit bandeau coudé (12) ; et chaque dite attache (13 ; 53) comporte des organes d'accrochage (39, 40) sur lesdites nervures (33, 34).

3. Ensemble selon la revendication 2, **caractérisé en ce que** ledit chemin de câbles (11) est en treillis de fils métalliques et ladite attache (13) comporte au moins un système d'encliquetage (35, 36) sur des fils (17, 18) dudit chemin de câbles (11).

4. Ensemble selon la revendication 2, **caractérisé en ce que** ledit chemin de câbles (51) est en tôle perforée et ladite attache (53) comporte des crans de retenue (58, 59) sur le voisinage d'ouvertures (52) du chemin de câbles (51).

5. Ensemble selon l'une quelconque des revendications 1 à 4, **caractérisé en ce que** ledit bandeau coudé (12) est entièrement courbé entre son côté longitudinal supérieur et son côté longitudinal inférieur.

6. Ensemble selon l'une quelconque des revendications 1 à 5, **caractérisé en ce qu'**il comporte un dispositif de cheminement formé par ledit chemin de câbles (11 ; 51) ou formé par ledit chemin de câbles (11 ; 51) et par au moins un autre chemin de câbles (11 ; 51) avec les chemins de câbles (11 ;
51) du dispositif qui sont agencés côte-à-côte, chaque chemin de câbles (11 ; 51) que comporte ledit dispositif étant ajouré et présentant un fond (15) et des ailes latérales (16) ; et ledit ensemble (10) comporte un habillage formé au moins par ledit bandeau coudé (12) et par un autre bandeau coudé (12), ledit habillage enveloppant extérieurement ledit dispositif de chaque côté latéral et partiellement du côté bas à partir de chaque côté latéral.

7. Ensemble selon la revendication 6, **caractérisé en ce que** ledit dispositif de cheminement (61 ; 62) est formé par ledit chemin de câbles (11 ; 51) et par au moins un autre chemin de câbles (11 ; 51) ; et ledit habillage est formé par ledit bandeau coudé (12), par ledit autre bandeau coudé (12) et par au moins un bandeau droit (72) enveloppant ledit dispositif (61 ; 62) du côté bas au moins au droit d'une zone à cheval entre deux dits chemins de câbles (11 ; 51).

8. Ensemble selon l'une quelconque des revendications 6 ou 7, caractérisé en ce ledit habillage enveloppe extérieurement du côté bas ledit dispositif sauf au droit de la partie médiane du fond de chaque dit chemin de câbles (11 ; 51).

9. Ensemble selon la revendication 7, **caractérisé en ce que** ledit bandeau droit (72) comporte une paroi principale (85) et des nervures (78, 79) orientés longitudinalement, saillant de ladite paroi principale (85) ; et ledit ensemble comporte des attaches (73 ; 83) pour la fixation entre lesdits chemins de câbles (11 ; 51) dudit dispositif de cheminement (61 ; 62) et ledit bandeau droit (72), chaque dite attache (73 ; 83) comportant des organes d'accrochage (76, 77) sur lesdites nervures (78, 79).

10. Ensemble selon la revendication 6, **caractérisé en ce que** ledit dispositif de cheminement (61 ; 62) est formé par ledit chemin de câbles (11 ; 51) et par au moins un autre chemin de câbles (11 ; 51); et ledit ensemble comporte un élément de montage (65) pour au moins un appareil électrique (45, 46) entre ledit chemin de câbles (11 ; 51) et ledit autre chemin de câbles (11 ; 51), lequel élément de montage (65) est configuré pour se prendre sur ledit chemin de câbles (11 ; 51) et ledit autre chemin de câbles (11 ; 51).

## Patentansprüche

1. Kabelführungsanordnung mit einer einen Boden (15) und Seitenwangen (16) aufweisenden durchbrochenen Kabelwanne (11; 51), wobei die Anordnung (10) zur Anbringung entlang einer Decke vorgesehen ist;
**dadurch gekennzeichnet, dass** sie ferner wenigstens eine gebogene Blende (12), deren konkave Seite zur Kabelwanne (11; 51) gerichtet ist, sowie Klammern (13; 53) umfasst, die dazu dienen, die Kabelwanne (11; 51) und die gebogene Blende (12) aneinander zu befestigen, wobei die gebogene Blende (12) nur durch die Klammern (13; 53) an der Kabelwanne (11; 51) befestigt ist und die Kabelwanne (11; 51) außen auf Höhe einer einzigen Seitenwange (16) und auf Höhe wenigstens eines Teils des von dieser Seitenwange (16) ausgehenden Bodens (15) umgibt.

2. Anordnung nach Anspruch 1,
**dadurch gekennzeichnet, dass** die gebogene Blende (12) eine Hauptwand (30) und längs gerichtete Rippen (33, 34) umfasst, die an der Hauptwand an der konkaven Seite der gebogenen Blende (12) vorstehen; und jede Klammer (13; 53) Organe (39, 40) zum Einhaken an den Rippen (33, 34) aufweist.

3. Anordnung nach Anspruch 2,
**dadurch gekennzeichnet, dass** die Kabelwanne (11) aus einem Metalldrahtgeflecht besteht und die Klammer (13) wenigstens ein System (35, 36) zum Einrasten an den Drähten (17, 18) der Kabelwanne (11) aufweist.

4. Anordnung nach Anspruch 2,
**dadurch gekennzeichnet, dass** die Kabelwanne (51) aus perforiertem Blech besteht und die Klammer (53) Halteraste (58, 59) in der Nähe von Öffnungen (52) der Kabelwanne (51) aufweist.

5. Anordnung nach einem der Ansprüche 1 bis 4,
**dadurch gekennzeichnet, dass** die gebogene Blende (12) zwischen ihrer oberen Längsseite und ihrer unteren Längsseite vollständig gebogen ist.

6. Anordnung nach einem der Ansprüche 1 bis 5,
**dadurch gekennzeichnet, dass** sie eine Führungsvorrichtung umfasst, die von der Kabelwanne (11; 51) gebildet ist oder von der Kabelwanne (11; 51) und wenigstens einer weiteren Kabelwanne (11; 51) mit den Kabelwannen (11; 51) der Vorrichtung, die nebeneinander angeordnet sind, gebildet ist, wobei jede Kabelwanne (11; 51), die die Vorrichtung umfasst, durchbrochen ist und einen Boden (15) und Seitenwangen (16) aufweist; und die Anordnung (10) eine Umkleidung umfasst, die wenigstens von der gebogenen Blende (12) und einer weiteren gebogenen Blende (12) gebildet ist, wobei die Umkleidung die Vorrichtung außen an jeder Seite und teilweise an der von jeder Seite ausgehenden Unterseite umgibt.

7. Anordnung nach Anspruch 6,
**dadurch gekennzeichnet, dass** die Führungsvorrichtung (61; 62) von der Kabelwanne (11; 51) und wenigstens einer weiteren Kabelwanne (11; 51) gebildet ist; und dass die Umkleidung von der gebogenen Blende (12), der weiteren gebogenen Blende (12) und wenigstens einer geraden Blende (72) gebildet ist, die die Vorrichtung (61; 62) an der Unterseite wenigstens auf Höhe eines zwischen zwei Kabelwannen (11; 51) übergreifenden Bereichs umgibt.

8. Anordnung nach einem der Ansprüche 6 oder 7,
**dadurch gekennzeichnet, dass** die Umkleidung die Vorrichtung außen an der Unterseite der Vorrichtung umgibt, außer auf Höhe des Mittelteils des Bodens einer jeden Kabelwanne (11; 51).

9. Anordnung nach Anspruch 7,
**dadurch gekennzeichnet, dass** die gerade Blende (72) eine Hauptwand (85) und längs gerichtete Rippen (78, 79) umfasst, die an der Hauptwand (85) vorstehen; und die Anordnung Klammern (73; 83) zur Befestigung der Kabelwannen (11; 51) der Führungsvorrichtung (61; 62) und der geraden Blende (72) aneinander umfasst, wobei jede Klammer (73; 83) Organe (76, 77) zum Einhaken an den Rippen (78, 79) aufweist.

10. Anordnung nach Anspruch 6,
**dadurch gekennzeichnet, dass** die Führungsvorrichtung (61; 62) von der Kabelwanne (11; 51) und wenigstens einer weiteren Kabelwanne (11; 51) gebildet ist; und die Anordnung ein Befestigungselement (65) für wenigstens ein elektrisches Installationsgerät (45, 46) zwischen der Kabelwanne (11; 51) und der weiteren Kabelwanne (11; 51) umfasst, wobei das Befestigungselement (65) zum Einhängen an der Kabelwanne (11; 51) und der weiteren Kabelwanne (11; 51) ausgebildet ist.

## Claims

1. Cable routing assembly, comprising an openworked cable raceway (11; 51) having a base (15) and side walls (16), said assembly (10) being provided for installing along a ceiling; **characterised in that** it also comprises at least one curved elongated panel (12), the concave surface of which faces towards the cable raceway (11; 51), as well as fasteners (13; 53) for fastening said cable raceway (11; 51) and said curved elongated panel (12) to one another, which curved elongated panel (12) is fastened to said cable raceway (11; 51) exclusively by said fasteners (13; 53) and envelops the outside of said cable raceway (11; 51) in line with a single side wall (16) and in line with at least a portion of the base (15) starting from said side wall (16).

2. Assembly according to claim 1, **characterised in that** said curved elongated panel (12) comprises a main wall (30) and longitudinally-oriented ribs (33, 34), protruding from said main wall on the concave side of said curved elongated panel (12); and each said fastener (13; 53) comprises elements (39, 40) for fastening onto said ribs (33, 34).

3. Assembly according to claim 2, **characterised in that** said cable raceway (11) is made from metal wire mesh and said fastener (13) comprises at least one system (35, 36) of catches for engaging on wires (17, 18) of said cable raceway (11).

4. Assembly according to claim 2, **characterised in that** said cable raceway (51) is made from perforated sheet metal and said fastener (53) comprises detents (58, 59) for holding onto the periphery of openings (52) of the cable raceway (51).

5. Assembly according to any one of claims 1 to 4, **characterised in that** said curved elongated panel (12) is completely curved between its upper longitudinal side and its lower longitudinal side.

6. Assembly according to any one of claims 1 to 5, **characterised in that** it comprises a routing device formed by said cable raceway (11; 51) or formed by said cable raceway (11; 51) and at least one other cable raceway (11; 51) with the cable raceways (11; 51) of the device arranged side-by-side, each cable raceway (11;51) included in said device being openworked and having a base (15) and side walls (16), and said assembly (10) comprises a cover formed by at least said curved elongated panel (12) and another curved elongated panel (12), said cover enveloping the outside of said device on each lateral side and partially on the bottom side starting from each lateral side.

7. Assembly according to claim 6, **characterised in that** said routing device (61; 62) is formed by said cable raceway (11; 51) and at least one other cable raceway (11; 51), and said cover is formed by said curved elongated panel (12), said other curved elongated panel (12) and at least one straight elongated panel (72) enveloping said device (61; 62) on the bottom side at least in line with an area spanning said two cable raceways (11; 51).

8. Assembly according to any one of claims 6 or 7, **characterised in that** said cover envelops the outside of the bottom side of said device apart from in line with the middle portion of the base of each said cable raceway (11; 51).

9. Assembly according to claim 7, **characterised in that** said straight elongated panel (72) comprises a main wall (85) and longitudinally-oriented ribs (78, 79), protruding from said main wall (85), and said assembly comprises fasteners (73; 83) for fastening said cable raceways (11; 51) of said routing device (61; 62) to said straight elongated panel (72), each said fastener (73; 83) comprising elements (76, 77) for fastening onto said ribs (78, 79).

10. Assembly according to claim 6, **characterised in that** said routing device (61; 62) is formed by said cable raceway (11; 51) and at least one other cable raceway (11; 51), and said assembly comprises a mounting component (65) for at least one electrical appliance (45, 46) between said cable raceway (11; 51) and said other cable raceway (11; 51), which mounting component (65) is configured to engage on said cable raceway (11; 51) and said other cable raceway (11; 51).
